# EUROPEAN PATENT SPECIFICATION

(11) **EP 2 293 690 B1**
(45) Date of publication and mention of the grant of the patent: **27.11.2019**
(21) Application number: 09771119.6
(22) Date of filing: 26.06.2009
(51) Int. Cl.: A23L 7/10, A23L 7/104

(54) **CONTINUOUS PRODUCTION OF CEREAL FLOUR AND WHOLE-CEREAL FLOUR FOR GRAIN-BASED FOODS USING A HIGH-SOLID CONDITIONING**
KONTINUIERLICHE HERSTELLUNG VON GETREIDEMEHL UND GANZ-GETREIDEMEHL FÜR NAHRUNGSMITTEL AUF KORNBASIS DURCH KONDITIONIERUNG VON FESTSTOFFEN
PRODUCTION CONTINUE DE FARINE DE CÉRÉALE ET DE FARINE DE CÉRÉALE COMPLÈTE POUR ALIMENTS À BASE DE GRAINS AU MOYEN D'UN CONDITIONNEMENT À HAUTE TENEUR EN SOLIDES

(30) Priority: 26.06.2008 US 75998 P
(43) Date of publication of application: 16.03.2011
(73) Proprietor: Investigación De Tecnologia Avanzada, S.A. DE C.V., Guadalupe, N.L. México C.P. 67110 (MX)
(72) Inventor: RUBIO, Felipe, A., Edinburg TX 78539 (US); RUBIO, Manuel, J., Miami Beach FL 33139 (US); CONTRERAS, Roberto, Guadalupe N.L. 67110 (MX); SOSA, Francisco, Guadalupe N.L. 67110 (MX); RAMIREZ, J. Fernando, Guadalupe N.L. 67110 (MX); LOBEIRA MASSU, Rodrigo, N.L. 64630 (MX)
(74) Representative: Brann AB
(86) International application number: PCT/US2009/048808
(87) International publication number: WO 2009/158588

(56) References cited:
- WO-A-2004/019701
- WO-A-2006/047700
- US-A1- 2006 024 407
- US-A1- 2007 148 318
- US-B1- 6 638 554

## Description

### BACKGROUND OF INVENTION

### 1. Field of the invention

The present invention refers to a hydrothermal process for the manufacture of novel grain flours from grain cereals and pseudocereals. The invention further relates to the preparation of cereal-base and functional-food ingredients for the production of grain-based foods. The invention also relates to a continuous moist-heat precooking process with an endoamylase and xylanase powder as a processing aid during a high-solid conditioning. This process is used for the production of pregelatinized masa flour for corn-based and instant whole-corn flour. The flours may be used for the production of grain-based foods.

### 2. Description of the Related Art

The AACC International (2006) comments on part III of the FDA's Draft Guidance on Whole Grain Label Statements provide:
1) Cereals and pseudocereals that, when consumed in whole form (including the bran, germ and endosperm) are considered whole grains. The overall macronutrient composition (proportions of carbohydrate, protein and fat) is similar for: Wheat - including spelt, emmer, farro, einkorn, kamut and durums, Rice - african rice, Barley, Corn - maize and popcorn, Rye, Oat, Millet, Sorghum, Teff - tef, Triticale, Canary seed, Job's tears, Millet - fonio, black and asian, Amaranth (*Sanchez-Marroquin, 1980, Ramirez, 1983, 1987*), Quinoa, Buckwheat - tartar and Wild rice.
2) Minimally-processed bulgur wheat and nixtamalized corn should also be considered whole grains, even though small amounts of the kernel are lost when using the traditional processing methods. These processes have been followed for millennia and both bulgur (U.S. Pat. No. 3,132,948) and masa flours (the end product of industrial nixtamalization: 1993 in *fao.org*) have long been regarded as whole grain and nutritionally are believed to function as whole grain.
3) Corn flour that has had all the pericarp removed is not whole grain. Nixtamalized corn products are a significant contributor to the whole grain intake of certain ethnic subcultures (e.g., Hispanic) and age groups in the United States. Some processes leave a significant amount of pericarp, but part of the bran and phenolics is solubilized into the alkaline wastewater and lost *(Sanchez, Ramirez and Contreras, 2005*).
4) Some authors (*Koh-Banerjee, 2004 and Jensen, 2004*) also examined the health benefits of consuming only foods containing 51% or more whole grain by weight; 25% or more whole grain and foods that contained any amount of whole grain. The observed decrease in risk reduction was not significantly affected by the whole grain content of the foods consumed. These FDA Health-Claim benefits (1999 in *cfsan.fda.gov*: Docket No. 99P-2209 in Food Labeling guide-Appendix C: *Whole grain foods and risk of heart disease and certain cancers*) in whole grain consumption are independent of the whole grain concentration of the food source when total intake of whole grain is comparable. The 2005 Dietary Guidelines for Americans established separate recommendations for fiber (label nutrition claim) and whole grains (label health claim), and when they refer to dietary fiber (or cereal fiber: a practical compliance marker), vitamins, minerals and phytochemicals/phytonutrients (potential phenolic-biomarker for whole grain) that may reduce the risk of cardiovascular and coronary heart disease (CVD and CHD: *Decker et al*. *2002).* Most nutrient content claim regulations apply only to those macro/micronutrients or dietary substances that have an established daily value (Reference value based on a 2000 calorie intake for children > 4 years). Health claims describe the relationship between a food, food component, or dietary supplement ingredient, and reducing risk of a disease or health-related condition. Such claims must be qualified to assure accuracy and non-misleading presentation to consumers. Finally, Structure/Function claims have historically appeared on the labels of conventional foods and dietary supplements as well as drugs. Functional foods must remain foods if it is satisfactorily demonstrated to affect beneficially one or more targets functions in the body, in a way which is relevant to either an improved state of health and well-being (Type-A claim in Europe) and/or reduction of risk of disease (Type-B claim in Europe). They are not "magic bullets" for optimal health, but part of a food/dietary pattern (*Ashwell, 2001 and Hu, 2003).*

Most clearly, whole grains do not equal fiber, just as fiber does not equal whole grains (DHHS and USDA has recommended since 2005: eating at least 3 ounces/day of whole grain, cereal, crackers, rice or pasta). Today, less than 1 serving of whole-grain foods (mainly from wheat, rice and corn) is consumed daily as part of the American diet. Dietary fiber can be easily added to foods making it difficult to distinguish the contribution of whole-grain and partial-whole ingredients to the total fiber content. A WHO (2003) report (Integrated prevention of noncommunicable diseases-cardiovascular, type-2 diabetes and certain cancers: Draft global strategy on Diet, Physical Activity and Health) recommended a diet limiting fat to between 15-30% of total energy intake and saturated fats to less than 10%. Carbohydrates (whole grains) should account for the bulk requirements - between 55-75% - but free sugars should stay below 10%. Protein intake should remain about 10-15%. Most diseases are caused by an incorrect lifestyle and diet. Current habits of eating make people ill and weak, shorten their lifespans, and impair mental and spiritual health (Know Thyself-prevention is better than cure and health is wealth: SSSB-Satvic, G.T. 1995).

Industry, academia, and government agencies are exploring methods to increase whole-grain intake in the American diet. The gradual substitution of whole-grain flour in a wide variety of staple foods (e.g., common wheat foods with a 20% to 85% flour content and 14-140 g-serving size: brownie, cake, cookie, cracker, doughnut-yeast, muffin, pasta, pastry, pie-crust, pizza, white bread and flour tortilla) in a way that maintains taste, convenience, and palatability could be a first step towards increasing whole-grain consumption while maintaining a product that is acceptable to consumers (i.e., WO2006/118778: Pregel Corn Flours for Cereal-based Foods).

Major grain-based foods include snacks (43%), breakfast cereals (31%), and yeast breads and rolls (14%). Only one of these servings is a whole grain serving, however.

Eight percent of the U.S. population 2 years of age or older is estimated to consume at least 3 servings (or ounce-equivalents) of whole grain per day (*MyPyramid.gov*). If intake is unchanged, formulation modifications by adding whole-grain flour to existing products would increase (50%) the number of 16-g whole-grain servings per day from 2.2 to 3.3 (*Marquart et al*. *2006*).

The Masa Flour and Wheat Milling Industry signed a federal agreement (Mexican Health Department) in 1999 to enrich, with vitamins and minerals, staple grain flours such as nixtamalized corn for tortillas and refined wheat for bread and flour tortillas (*insp.mx*). About 66% of the wheat flour brands (i.e., Selecta® and Monterrey®) and all of the whitemasa flour brands (i.e., Maseca® vitaminada and Agroinsa®, Minsa®) were fortified. This indicates that at least 30-40% of Mexican tortilla consumption is fortified with niacin, thiamine, riboflavin, folic acid, reduced/ferrous iron and/or zinc oxide were added to. Other masa and mixed whole-grain flours have been developed since 1997 (i.e., first and second generation of staple-flours) for improving micronutrient content and reducing risk of malnutrition for the population (Ramirez and Sanchez-Marroquin, 2004), for example: Maseca® enriquecida (with 6% deflated soyflour), Maseca con amaranto™ (with 10-20% whole-grain amaranth) Maseca enfrijolada™ (with 10-15% black/red-bean flour), Maseca 100% Natural™, Maiz amarillo con doble calcio™ and Maiz azul con doble calcio™ (white corn, yellow and blue corn with twice the calcium and vitamins/minerals).

The production of high-quality masa and functional corn flours can be achieved by conventional and modern techniques (dry and wet milling) only if the organic (pre/postharvest pesticide-free) or food-grade corn, using good agricultural practices (GAP), has the following characteristics: uniformity in kernel size and hardness, a low number of stress-cracks and kernel damage, and ease of digestion and pericarp removal during the lime-water precooking process.

The five general classes of corn - flint, popcorn, flour, dent and sweet - are based on kernel characteristics. A common classification of maize based on endosperm quality and commercial production distinguishes their types: 1) Sweet with <1% for processed-vegetable; 2) Pop with 1% for confection; 3) Flour with 12% for food; 4) Flint with 14%; and 5) Dent with 73% for feed/ food.

The ratio of horny (hard and translucent) to floury (soft and opaque) endosperm may average from about 1:1 to 2.4:1 in yellow and white-dent corn (*Pomeranz et al.,* 1984, *Gonzalez,* 1995, and *Yuan etal.,* 1996). It is known that the food grade corn (U.S. No. 1 and 2: USFGC, 1996) should be partially cooked before it is formed into the end products, so as to cause it to be a novel precooked corn flour. White and yellow corn may contain: 11.0-11.5% moisture, 72.2-73.2% starch/non-starch polysaccharides, 9.8-10.5% protein, 3.7-4.6% fat and 1.1-1.7% ash. The mature dent kernel (*Watson,* 1987; 1993 in *fao.org*) has five separable components, on a dry weight basis: tip cap (0.8-1.1%), pericarp (5.1-5.7%) and aleurone (2.0-3.0 %), endosperm (78.3-81.9%), and germ (10.2-11.9%).

In dry or wet-milling processes, the separated bran includes the pericarp/seed coat-layer, tip cap, aleurone-layer and adhering pieces of starchy endosperm (*Stone, 2006*). A native corn bran contained dietary fiber (57-76%), starch (4-22%), proteins (5-8%) arising from endosperm and glycoprotein (*Saulnier et al*. 1995 and *Hromadkova et al*. 1995) and fat (2-7%) as well.

In the dry-milling process, the primary product is isolated pieces of floury and horny endosperm, which are recovered by progressive milling, sieving (or classifying) and aspiration process. Dry milling is often used to refer to one of the following processes: a) tempering degerming; b) stone-ground or nondegerming; and c) dry grind ethanol process (ie., New SuperPro Designer® Model, USDA-ERRC, 2006). The tempering degerming process can separate the endosperm, germ and bran pieces for food and feed uses.

In northern South America, particularly in Colombia and Venezuela, food-grade corn is processed with dry milling technology without wastewater and it is further converted into a steam-precooked, degermed (U.S. Pat. 3,212,904 and EP 1,142,488A2) or debranned (EP 0,883,999A2 and U.S. Pat. 6,326,045) flour for traditional corn foods. Its consumption is mainly in the form of an "arepa", which is a flat or ovoid-shaped, unleavened, and baked thick-pancake made from dry-milled corn flour. In other South American countries, corn meal (arepa and polenta) and corn flour are used for different bakery (pancake mixes: empanada and cachapa), gruel ("colada"-thin-porridge) and snacks.

To recover starch by wet-milling, the granules within the endosperm cells must be released from the protein matrix (gluten) by treating corn (or endosperm) with alkali or an acidic reducing-agent (preferably sulfur-dioxide or lactic-acid) in a steeping process. Enzymatic corn wet-milling using protease, xylanase and amylases (U.S. Pat. Nos. 6,566,125 and 6,899,910) not only reduced solid loss but also steeping time which represents 21% of the capital/energy cost. Corn starch refiners could begin to implement this technology within the next 5 years (USDA, 2002).

A shelled corn (at $120/ton with 18 MM-Btu: $6.7 USD/MM-Btu) through wet milling refining can yield: 55% of high-value starch (or 58% sugars or 15-30% dry-ethanol), 20% animal feed (fiber/protein), 5% gluten meal (protein), 2% oil and 18% corn-steep liquor (feed or fermentation substrate). Other value-added and grain-based products include a corn protein isolate (wet attrition micron-milling® technology in: *energeticsusa.com*) which can have novel applications in the growing nutritional ($68.5 billion/yr) and health ($18.5 billion/yr) foods markets.

While organic grains represent a smaller market than well-established conventional markets, the Organic Industry grew 20% to reach $10.8 billion in consumer U.S. sales in 2003.

A modular wet mill unit (e.g., mini-biorefinery: MBR:EnerGenetics International, Inc.) can produce high-valued products from a low-value fuel ethanol operation (33% yield: at $660/ton with >$18 USD/MM-Btu). Corn represents about 40% of the total ethanol production cost ($300/ton) and energy about 33% (gas or oil). Ethanol manufacturers benefit from a substantial tax-credit: with a $2-billion annual subsidy, they sold more than 16 billion liters of ethanol in 2005 ($11.4-billion value and almost 3% of all automobile fuel by volume), and production is expected to rise 50% by 2007 (*sciam.com*).

Energy recovery and renewable energy have supplied more than 80% in the US incremental energy requirement since 1973 ($0.25 USD/MM-Btu). But given today's high prices for natural gas ($3.50 USD in 2000 and >$7 USD during 2006: *oilnergy.com*), no realistic price reductions will happen without concerted international and national programs and incentives to encourage the faster adoption of efficient and renewable energy (biofuel) as well as natural gas. The success and cost effectiveness of this integrated approach has been by redesign or continuous-improvement of processes: reduce/recycle/re-sell waste, reduce energy use and emissions (*Acee,* 1997).

Nixtamalized corn flour (NCF) is produced by the steps of alkaline precooking (heating and steeping) of corn grain, washing, wet milling the nixtamal, and drying, thereby producing corn masa flour. At the industrial or commercial level, the milling and dehydration process steps are major cost factors. This precooked flour is sieved and blended for different product applications and it is usually supplemented with additives before packaging for commercial table or packaged-tortilla and corn-based foods. In a commercial operation, corn solid loss has been estimated at 5-14% depending on the type of corn (hard or soft) and on the severity of the precooking, steeping (5-24 hrs), washing and drying process *(Pflugfeder et al*. *1988, Bressani,* 1997 and *Sahai et al*. 2001).

The most important biochemical changes during nixtamalization are: an increase in the calcium level with improvement in the Ca to P ratio; a decrease in insoluble dietary fiber and zein-protein; a reduction in thiamin and riboflavin; a reduction of the leucine to isoleucine ratio while reducing the requirement for niacin; niacin-release from bran and endosperm; and industrial leaching of ferulic-acid (1500 to 1900 ppm: Sanchez et al., 2005, WO 2004/110975), residual insecticides/fungicides and micotoxins (aflatoxin-B1 and fumonisin-Bl) into the alkaline steep-liquor or "nejayote" (*Murphy et al*., *2006 and Palencia et al*., *2003*).

Production of various foods and novel ingredients through fermentation, also called bioprocessing, has occurred since the earliest records of man's preservation of foods. Microorganisms and enzymes are used widely for the conversion of raw food substrates (e.g., cereal grains and milks) into a plethora of fermented products (e.g., sourdough bread, sourdough corn/pozol and yogurts). The main result of a lactic fermentation is a dispersion of endosperm protein/zein and an enhancement of starch release during subsequent milling for acid-fermented corn beverage or gruel ("yugurtlike corn products": *Steinkraus*, 2004). Bioprocessing technology has been further developed for specialized production of food ingredients (e.g, organic acids, amino acids, vitamins, and hydrocolloids), or processing aids (Enzymes: carbohydrases - amylase/xylanase/cellulase/glucanase/pullulanase or glycosyl hydrolases, hydrolases - proteases, lipases/esterases, isomerases, oxidoreductases, lyases, transferases and ligases). Processing aids (secondary direct additives) are used to accomplish a technical effect during food processing but are not intended to serve as a technical or functional additive in the finished food (21 CFR 173). Enzymes that serve as processing aids for food and feed applications have become available from the following companies: Alltech, Amano, Danisco-Cultor-Genencor, Dyadic, EDC/EB, Gist-Brocades, Iogen, Novozymes, Old Mill, Primalco, Rhodia-Rhom and Valley Research. All Generally Recognized As Safe (GRAS) substances made with recombinant-DNA technology must comply with regulatory requirements proposed in 21 CFR 170.36 (GRAS Notice).

Properly processed commercial corn for masa flour simplifies the production of tortilla products, because the customer eliminates management techniques required for wastewater treatment, securing, handling and processing corn into masa for tortillas and snacks. However, a pregelatinized corn flour might have the following quality and cost limitations: high cost, lack of flavor/aroma, and poor texture. As the market for com/tortilla snacks ($4.5 billion-retail sales in popular savory snacks in 2001) and Mexican foods continue to grow worldwide with the quality and price difference will narrow between the industrial masa flour and traditional masa. It is estimated that additional sales of about $2 billion per year can be attributed to smaller tortilla processors and manufacturers (US 2006193964). It is also estimated that Americans consumed approximately 85 billion tortillas in 2000 (not including tortilla chips).

New formulations in baked (Maseca® Regular-yellow: 60% and <60 mesh) and processed-foods (Maseca® Normal-white: 70% and < 45 mesh) keep expanding such as corn-based tortilla snacks and maize-flour raviolis® prepared from nixtamalized corn flours (U.S. Pat. No. 6,491,959 and *Erempoc, King and Ramirez, 1997*). Third-generation (3G) cereal foods include the steps of extrusion cooking, followed by cooling, holding and drying to make "cereal pellets" which are expanded by frying or baking to make nixtamalized corn-based foodstuffs (novel masa-based snack in U.S. Pat. No. 5,120,559 with 100% Maseca® white, and hypercholesterolemia-reducing snack in US 2004/086547 with Maseca® Regular-yellow). Another example is breakfast cereals made by cooking whole grains or grits (wheat, barley, rye, oats, rice or corn), treating the cereal material with a microbial isoamylase (food processing aid), tempering (i.e., holding at a moisture content of 20%-55% and 80°C), forming, shredding and baking or toasting the cereal-based foods (CA 2015149 and CA2016950). U.S. Patent No. 2,174,982 teaches a process for making shredded or flaked cereal foods from cereal grains such as wheat, rye, corn or oats. Another process for preparing a cereal from whole grains comprises rupturing the bran coat, optionally gelatinizing the starch with heat, and then treating the gelatinized starch with amylases from a malted grain. After the tempering (2 hours/ 60-70°C), the converted grain was heated to inactivate the enzyme, dried and processed to produce a toasted product in flaked or granular form (U. S. Pat. No. 2,289,416). Highly resistant granular starches may be prepared at a percent moisture and temperature insufficient to destroy the granular nature of the cereal starch, and digesting the amorphous regions using an endoamylase or chemical reagent (EP1088832A1). The enzyme treatment may also be carried out using high solids. In this enzyme conversion process (EP0806434), the starch, water (30-35%) and amylase are mixed in an amount to produce a single phase powdered mixture and the enzyme is heat activated. In the production of breakfast cereals (third-generation snacks) which includes a holding period for starch retrogradation, the addition of a endoxylanase (1-20 ppm) to preconditioned cereal-based raw materials (20-50% moisture) accelerates the retrogradation and thus allows a shortening of the tempering step (U.S. Pat. No. 7,033,626).

New baked foods containing whole grains may qualify to carry labels with the following or other related health claims: a) "Development of cancer depends on many factors. Eating a diet low in fat and high in grain products, fruits and vegetables that contain dietary fiber may reduce your risk of some cancers" (21 CFR 101.76); and b) "Development of heart diseases depends on many factors. Eating a diet low in saturated fat and cholesterol and high in fruits, vegetables and grain products that contain fiber may lower blood cholesterol levels and reduce your risk of heart disease" (21 CFR 101.77 and 81: FDA/DHHS, 2004 *and Jones, 2006*).

A milling or grinding process involves two distinct breakage mechanisms, namely: a) shattering (impact/cut or compress), an operation that results in daughter particles having a size about the same order as that of the parent particle and b) surface erosion (abrasion/attrition or friction), another operation that effects in the generation of fines during the initial stages. The existence of these phenomena was evident from the characteristic bimodal size distribution curve and the progressive change in the relative weight of the large and fine particle populations (*Becker et al.,* 2001, *Peleg et al*. 1987 *and Aguilar and Ramirez, 1991).* The size reduction method of the disk-mill (abrasion) and the impeller-mill (impact) are somewhat different. Within the disk mill, corn particles are broken along lines of weakness by impact and shearing forces; the resultant particles are typically not very small and with poor uniformity of particle size. Particles milled with the impeller mill are forced against an abrasive ring by the high-speed rotating impeller; therefore pieces of the material are worn away from the bulk material. In raw maize grits (US mesh 400 to 45 with 75% starch, 8% protein, 5% dietary fiber and 1% fat) which were milled with impeller-mill, the larger particles (> 60 mesh:> 250 µm) produced a lower peak viscosity (at 95°C) and longer peak-time (at 95°C) as compared with the profiles from smaller particles (*Becker et al.,* 2001). They also found that the impeller-mill caused some starch damage along with protein denaturation caused by heat (with temperatures ≤50°C). This mechanical damage can increase the gelatinization degree with a lower apparent viscosity than the unmilled and disk-milled corn grits. A higher protein content (3-fold or 2.4% vs. 0.7%) was measured in the medium impeller particles (mesh 120 to 70: 170 µm-median) effecting a lower peak viscosity (at 95°C) than the medium disk particles by diluting not only their starch content but also denaturing their endosperm protein. Dehydrated-masa prepared from white-maize (disk or stone-mill) resulted in a lower viscosity than nixtamal (*Martinez-Bustos et al*. 2001). Addition of soybean protein in corn-based flours reduced peak viscosity because the starch was diluted in the legume-corn mixture for enriched-tortilla (*Tonella et al*. 1982) and tamal/arepa with lime-treated corn and amaranth flours *(Ramirez 1983 and Ramirez, Hernandez and Steinkraus, 1984).*

The Azteca Milling L.P. corn flour *(Becker et al.,* 2001: Maseca ® brand < 60 mesh with 68% starch, 9% protein, 8% dietary fiber and 4% fat) was used for making an extruded half-product from maize, using a thermo-mechanical extrusion process, and the peak and final viscosities recorded were 5 and 10-fold lower than those for the native grits, respectively. Starch degradation to oligodextrins can increase as extrusion temperature is raised and the moisture level in starch is reduced. Food extruders can be regarded as high-temperature and short-time cookers (<5 min), in which granular starch (grits/flour) having a moisture content of 10-30% is first compressed into a compact dough and is converted into a molten, amorphous mass by the high pressure, heat (60-135°C) and mechanical shearing during processing. A novel extrusion (at 85-90°C) using fine-masa flour (Azteca Milling: Maseca ® white with 8% total fiber) produced a snack with unique cracker-like structure (faster breakage with same force) and crunchier texture (*Chen et al*. 2002 and U.S. Pat. No. 5,120,559). They not only detected a higher partial-gelatinization in the masa flour (30-50%) attributed to masadough drying (10-30%), but also a more viscous and gelatinized extrudate (>90% gelatinization) half-product pellet (ready to fry: 10-12% water) or tortilla chip (ready to eat: 1-2%). A similar corn-based tortilla chip used a pregelatinized corn flour in an amount of 8 to 65% of the total flour formulation (Maseca ®Regular yellow: with a 20%-60% gelatinization degree). A low-fat and baked product (>5-15% bran) can also be produced with a crispy/crunchy and non-mealy texture with a tortilla flavor (U.S. Pat. No. 6,491,959).

The first heat/moisture investigations where an excess of water content starch suspensions or slurries:>30%) was used or where the water content was below 30% (no free water in solid-paste) the type of moisture is clear (*Stute,* 1992). However, in some investigations it is not clear if it was an annealing (low-temperature and long-time: 50-65°C and > 10 h with >50% water) or a heat/moisture treatment (high-temperature and short-time: 95-110°C and <2 h with 15-30% water). The first published viscosity curves showed that a lower peak viscosity with a higher gelatinization temperature (peak viscosity temperature), and-depending on the degree of hydrothermal treatment-at lower degrees a higher and at higher degrees a lower setback. A reduced gelatinization degree (i.e., low swelling capacity) of the starch granules leading to a higher setback (this annealing effect was used to prepare a pudding starch or "pregelatinized potato starch"; *Stute, 1992),* whereas at higher degrees of modification the swelling is inhibited to such an extent that the setback is lower (this heat-moisture effect is used to make "partial-pregelatinized whole wheat-flours" or instant flours with 15% to 99% degree of gelatinization; *Messager, 2002*). Jet pasting water hydratable colloids (low 7% to 39% solids or high 61-93% moisture content), such as cereals, starches and cellulose derivatives can be achieved effectively using direct steam injection (high-pressure saturated steam, ranging from 60 to 200 psi). Mixing jet cooking of a corn-starch paste or slurry (10-800 micron) instantaneously heats up above the gelatinization/gelation temperature (pasting temperature of 150°C during 1 to 8 minutes) and vigorously mixes the suspension of granules in water/vapor rapidly swelling starch to achieve hydration, disassociation and dispersion of their polymer-chains to form a fluid sol *(Perry,* 2000). On the contrary a corn-starch extrusion or a corn-starch steam jet-cooking-followed by drum drying (150°C) with low water content (20%) at elevated temperatures (175°C and 140°C) both gave a completely melted or molecularly dispersed/disrupted starch. Extruded corn starches absorb water at room temperature to form pastes made of soluble starch and swollen endosperm with little degradation to oligodextrins (*Shogren et al. 1993).* Therefore, the terms annealing (high-moisture treatment below the gelatinization temperature) and heat-moisture or semi-dry (low-moisture treatment above gelatinization temperature) are describing completely different changes within the starch granule.

Several methods for industrial masa production include: a) traditional cooking (i.e., high-temperature and long-time); b) accelerated steam cooking (i.e., high-temperature and short-time); and c) extrusion cooking with lower-moisture content (i.e., high-temperature and short-time), with lime-cooking of the whole or ground corn kernel. Corn masa includes the cooked corn in either its wet (fresh masa) or dry (masa or nixtamalized flour) commercial product for tortilla and derivatives..

It involves an alkaline-cooking by boiling (80-100°C) corn in water (1-2% lime). Steeping the cooked kernels for 12 hours or more and then washing with water to remove lime and soluble solids. The washed kernels (nixtamal) can be ground in disk mills and the resulting corn dough (masa) is suitable for making fresh products.

Steam cooking of the whole-corn kernel starts with steam injection into a suspension of maize in lime-water (corn to water ratio of 1:2-3 and 1-2% lime on corn basis). Steam is injected to partially gelatinize the corn starch (at 70-95°C during 20 to 100 minutes). The lime-cooked kernel is allowed to steep overnight (>10 h at 40°C-average) and is then washed and disk-milled in order to cut, knead and mix the ground nixtamal to form masa. Its calcium content increases mainly in the pericarp and germ and hence stabilizes lipid oxidation (*Fernandez-Muñoz et al*. 2004). Additional water is added during disk-grinding in order to cool the mill and increase the moisture level. A drying step followed by grinding and sifting will yield a dry masa flour for tortilla and chip.

A novel enzymatic (with an alkaline-protease: 200-250 ppm) process for nixtamalization of cereal grains (U.S. Pat. No. 6,428,828) was applied to corn grain/meal for production of instant masa flours and reducing wastewater solids (3-12%). Other treated grains were wheat, rice, sorghum and millet. Four recent low-temperature and alkaline or neutral-pH precooking processes have been applied to corn grain for the elaboration of instant corn flours for tortilla, arepa and snack foods (U.S. Pat. Nos. 6,265,013, 6,638,554, 7,014,875 and US 2006/024407). Several endoenzymes (xylanase, amylase and protease) were used to effect a continuous and partial hydrolysis of insoluble heteroxylans and starchy and proteinaceous bran cell-walls in the corn grain.

With accelerated steam-cooking (MX Patent 993,834 and U.S. Pat. Nos. 4,594,260, 6,344,228 and 6,387,437), steam is injected under pressure into an aqueous suspension (corn to water ratio of 1-1.5:0.3-1 and 0.3-1.5% lime) in a general range of between 1 to about 25 psig (at 70-140°C) during a period of time of 1 to 40 minutes. The nixtamal is washed and cooled to about 80°C, and is then steeped for about 60-180 minutes. The wet or semi-wet steeped nixtamal is continuously impact-milled and flash-dried effecting a partial cooking or pregelatinization. This simultaneous comminution and dehydration with gases not less than 180°C, results in enzyme inactivation (endogenous and microbial) along with a moist-heat sterilization of the product (U.S. Pat. No. 2,704,257).

After classifying the masa flour, an increase in water uptake (yield) and peak viscosity (viscoamylograph) will depend on particle size distribution. These prior art methods for industrial masa production involve short-precooking and steeping times with lower soluble-wastes (1.2-2.7% chemical oxygen demand) and total-solids (∼1.5-3.5%). Extrusion cooking (Bazúa et al., 1979, U.S. Pat. Nos. 5,532,013 and 6,482,459) of a dehulled or whole-corn flour with a low-moisture content has been tested by extruding a mixture of meal/flour, with lime (corn to water ratio of 1:0.3-0.6 and 0.2-0.25% alkaline agent on flour) and water in an extruder cooker or horizontal screw-conveyor until a homogeneous dough or steamed-meal is uniformly heated for 1 to7 minutes at 60-130°C (>20 psig). The cooled corn dough or meal (40-70°C) is further dehydrated in hot air, milled and sieved to yield a partially-dehulled or whole-corn flour. Corn toasting (200-260°C, 5-12 minutes) can depolymerize, by dextrinization, and decrease swelling-potential of cereal and corn starch at low-water content (9-10%). Under the low-moisture conditions used in extrusion, gelatinizing the starch granules depends on a combination of heat and mechanical conditions to give foods which are soft and easily water soluble.

Some patent applications have been published (WO 2004008879, U.S. Pat. No. 6,516,710, MX/PA/a/2001/012210 or US 2003/198725) for the preparation of a nixtamalized and instant corn flours by means of a moist-heat cooking/precooking, with or without alkaline-wastewater production, as opposed to the traditional nixtamalization processes (TNP) referred to above. Recent innovations related to fractionated nixtamalization processes (FNP) to obtain instant masa and dry masa flours include using steam-injection during a short-time to heat dehulled/degermend-corn (U.S. Pat. No. 6,277,421) or corn fractions (U.S. Pat. No. 6,265,013, US 2006/177554, US 2006/193964 and *Cortes et al., 2006*) such that their endosperm, germ and pericarp fraction were partially gelatinized and denatured.

WO2004/019701, WO2006/047700 and US2007/148318 relate to the production of a precooked and partially-debranned corn flour, wherein whole corn kernels are treated with enzymes and not enzymatic processing of a fine grind fraction of corn kernel.

Although the above described prior art methods are capable of partial cooking or steeping/conditioning of whole or broken corn with or without endoenzymes as a processing aid, a continuous process using not only a moist-heat precooking and enzymatic treatment of debranned-corn and ground whole-corn with a minimum amount of water and energy was still unavailable in the market at the time of the invention to produce a partial and whole-corn flour.

### SUMMARY AND OBJECTS OF THE INVENTION

Accordingly, it is an object of this invention to provide a complete departure from the prior art precooking methods of thermal, mechanical and enzymatic processing of cereal grains such as corn, wheat, rice, barley, rye, oat, sorghum, millet, triticale, teff, amaranth, quinoa and buckwheat to produce flour-like products. The process may include the steps of providing a fine grind fraction of corn kernel, i.e. a wet-milled whole corn fraction composed of endosperm, germ and aleurone-bran; combining said fine grind fraction of corn kernel with at least one endoamylase and endoxylanase to produce an enzyme-added fraction; moist-heat precooking said enzyme-added fraction to obtain a pre-cooked enzyme-added fraction; high-solid conditioning said precooked enzyme-added fraction to partially hydrolyze starchy endosperm and swell starch and aleurone-bran granules to produce enzymatically conditioned corn kernel particles; and milling said conditioned corn kernel particles to obtain flour. Another object of this invention is to use cleaned kernels and produce a debranned-corn and ground corn in order to effect a controlled starch gelatinization and protein denaturation during a continuous moist-heat precooking.

Another object is to produce these pregelatinized and instantized corn flours utilizing a continuous high-solid conditioning with a commercial endoamylase and endoxylanase which is not only water and energy efficient but also less expensive than prior art methods for the elaboration of pregel and instant corn flours. At least one GRAS endoenzyme can be used as a processing aid.

Still another objective is to produce masa flour for corn-based and whole-corn flour for grain-based foods wherein such cereal-base and functional-food ingredients are relatively uniform in their biochemical and phytochemical content and physico-chemical properties.

The above and other objects and advantages of the invention are achieved by a new continuous process applied to the production of pregel and instant corn flours for grain-based foods, embodiments of which comprise the steps: moisturizing the whole cleaned kernel to precondition the same; milling the wetted kernel to produce fine and coarse grind fractions; sifting the fine grind and aspirating from both grind fractions a light-bran fraction for use, for example, as animal feed; remilling the coarse grind for further bran removal; mixing the sifted fine grind with an endoamylase and endoxylanase as a processing aid to produce an enzyme-added grind; moist-heat precooking of a stream of corn particles in another stream of saturated steam to obtain a partial gelatinization and protein denaturation; venting the waste steam and separating the precooked fine particles; high-solid tempering of the fine grind to partially digest both endosperm and aleurone-bran fractions; hot-air drying the conditioned fine grind and endoamylase inactivation for extended shelf-life while extracting exhausted hot-air; cooling with clean air while wasting moist-air from the dried fine grind; milling the agglomerated particles; screening and separating the fine grind so produced from the coarse grind while the coarse grind fraction is further remilled and sieving the fine grind to obtain a corn flour; and admixing fine flour with lime to obtain a masa flour and whole-corn flour for corn and grain-based foods.

### BRIEF DESCRIPTION OF THE DRAWINGS

This invention may be understood from the description which follows of preferred embodiments when read with the accompanying drawings.
FIG. 1 is a schematic flow sheet illustrating the continuous and industrial process using a low-moisture and enzymatic treatment with an endoamylase and endoxylanase powder as a processing aid for the elaboration of a masa and whole-corn flour for corn and grain-based foods.
FIG. 2 A. shows comparative chromatograms of Arabinoxylan standards (A) and China-Kangwei (B) xylooligosaccharides (XOS).
FIG. 2B is an amplified HPAEC-PAD chromatogram of sample hydrolyzed with 2-PMP (Xylanase; 1000 ppm) illustrating the enzymatic production of linear-xylooligosaccharides (DP: 5-8) in whole-corn flour and masa flour.
FIG. 2C is an ESI-MS spectrum showing enzymatic production of prebiotic branched xylooligosaccharides (XOS) (DP: 5-7 glucuronic-arabino-xylose (GAX) oligomers or acidic xylooligosaccharides) in whole-corn flour and masa flour.
FIG. 2D is an ESI-MS spectrum of sample hydrolyzed with 2-PMP (Xylanase: 1000 ppm) showing enzymatic production of prebiotic branched xylooligosaccharides (XOS) (DP: 5-7 glucuronic-arabino-xylose oligomers or acidic xylooligosaccharides) in whole-corn flour and masa flour.

### DETAILED DESCRIPTION OF THE PREFERRED EMBODIMENTS

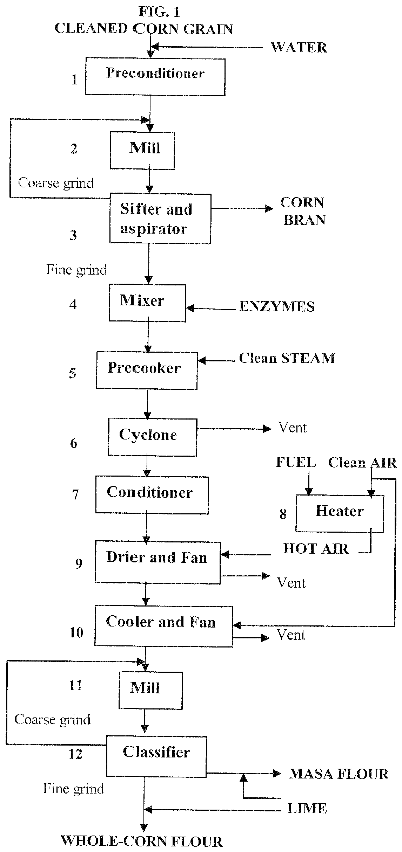

Referring first to FIG. 1, there is depicted, in flow diagram form, an embodiment of the present invention. It includes a preconditioner 1; a primary mill 2; a sifter 3 with an associated aspirator; a mixer 4; an industrial low-moisture precooker 5; a cyclone 6; a high-solid conditioner 7; a heater 8; a drier 9 with a fan; a cooler 10 with an associated fan; a secondary mill 11 and a classifier 12.

Whole corn grain (e.g., U.S. No 1. designation or value-enhanced grade), which has been freed of broken corn and foreign material by dry cleaning (screening and aspiration), is fed to a preconditioner 1, where the clean corn is continuously sprayed with water for about 3 to 5 minutes to uniformly wet and soften the bran (pericarp and aleurone), germ and endosperm fractions. Corn moisture is adjusted from about 10-12% to about 16-20% while using a corn grain to water ratio of 1:0.12 to 1:0.24. The novel bioprocess relates preferably to corn grain (Zea mays L.: white, yellow and blue), but also includes other cereal (farinaceous) grains and pseudocereals for food and cereal-base ingredients within its scope. Other suitable cereals include wheat (Triticum spp.), Rice (Oryza spp.), Barley (Hordeum spp.), Rye (Secale cereale spp.), Oats (Avena spp.), Millets (Brachiaria spp., Pennisetum spp., Panicum spp., Setaria spp., Paspalum spp., Eleusine spp., and Echinochloa spp.), Sorghum (Sorghum spp.), Teff (Eragrostis spp.), Triticale (Phalaris arundinacea), Buckwheat (Fagopyrum spp.), Amaranth (Amaranthus cruentus, A. caudatus and A. hypochondriacus) and Quinoa (Chenopodium quinoa).

The moisturized kernel is passed through a primary mill 2, which breaks and abrades the bran loose from the kernel, tears out the germ, and coarsely grinds the kernel into two fractions. The large-sized portion of broken corn is known as the coarse grind fraction ("tail stock", and part of it can be isolated as large flaking grits) composed of endosperm, germ and pericarp-bran, while the small-sized portion is described as the fine grind fraction composed of endosperm, germ and aleurone-bran (also known as "through stock").

This wet-milled whole corn thus obtained is next directed to a sifter 3 with an associated aspirator wherein three fractions are separated, namely, the small finer grind which is thereafter fed to a mixer 4, the large coarser grind (above 10 to 25 mesh) that is recycled to the primary mill 2 for further regrinding, and the light bran which is isolated with airflow as a corn by-product (containing from 10%-16% moisture). This segregated and light bran fraction (above 10 to 25 mesh) can represent from 4%-16% and from 1%-3% of the total weight of clean corn for producing a partial-whole (masa) and a whole-corn flour, respectively.

The sieved finer grind (representing a 90% and 98% average of the total weight of incoming corn, respectively) is further conveyed to a mixer 4, wherein it is admixed with an endoamylase and endoxylanase, preferably in the form of a powder, (enzyme-activity from 60°C to about 80°C and pH from 6 to about 9) to supply from 0.005% to about 0.10% by weight processing aid to produce a masa and/or whole-corn flour, respectively. Prior to mixing, the enzyme can be mixed with a portion of the corn flour as a carrier to form a so-called enzyme premixture. It is possible that the endoenzyme may include a food-grade or powdered carrier and one of alpha-amylase (EC 3.2.1.1) or debranching amylase (e.g., EC 3.2.1.11, 33, 41, or 68) or granular-starch endoamylase (DK200301568 and US 2006/147581; US 2004/043109 and U.S. Pat. No. 6,890,572) or endoxylanases (e.g., EC 3.2.1.8, 32, 78, 99, or 136; feruloylated-arabinoxylan/feraxan endoxylanase, U.S. Pat. No. 4,954,447). In general, the endoamylase and xylanase powder is admixed in an amount up to about 0.10%, preferably from 0.005% to about 0.10% by weight of the fine ground flour. At least one enzyme is preferably selected from microbially derived endoamylases and endoxylanases that are recognized as GRAS substances and used as processing aids (21 CFR 170.36).

After completing the mixing step, the enzyme-added fine grind (containing from 16% to about 20% moisture) is transferred to an industrial low-moisture precooker 5, whose design is known per se, wherein saturated steam is injected under pressure into a stream of corn fine particles as they enter the hydrothermal precooker (venturi throat), instantly heating and moisturizing the fine particles to the desired temperature. The temperature is controlled by adjusting the pressure of the injected steam, and is preferably from about 100° C to about 170° C. The fine particles stream is further hydrated and dispersed at the elevated temperatures (e.g., 70°C to 80°C) for about 0.2 second to about 1 second, with the residence time being adjusted by the corn flow rate through the hydrothermal precooker (venturi mixing tube or low-pressure flow tube). Preferably the steam pressure is about 15 psi to 90 psi to control the steam flow rate and ensure that the precooking temperature is set for a fixed corn flow rate. By this means, the precooked fine grind is increased to a moisture content of 20% to about 25% (i.e., above its gelatinization and denaturation temperature). The starchy and aleurone endosperm is not only partially gelatinized but also the germ and aleurone-bran proteins are partially solubilized using this moist-heat precooking technique. Thermal processing (25 min at 115°C) of sweet corn increased the level of solubilized feruloylated-oligosaccharides while the insoluble bound glycosides decreased with time and temperature (Dewanto et al., 2002).

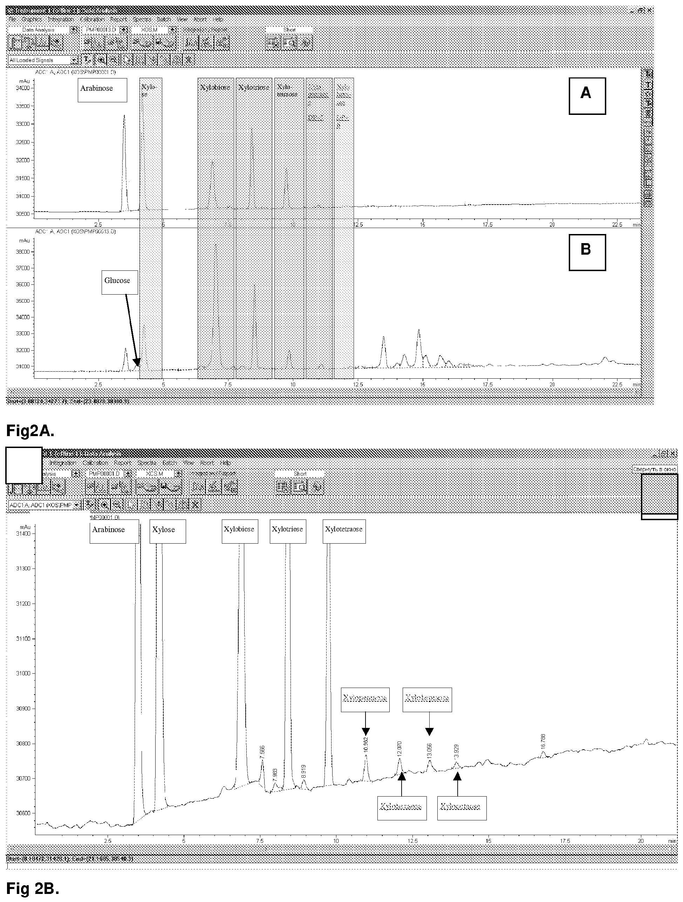

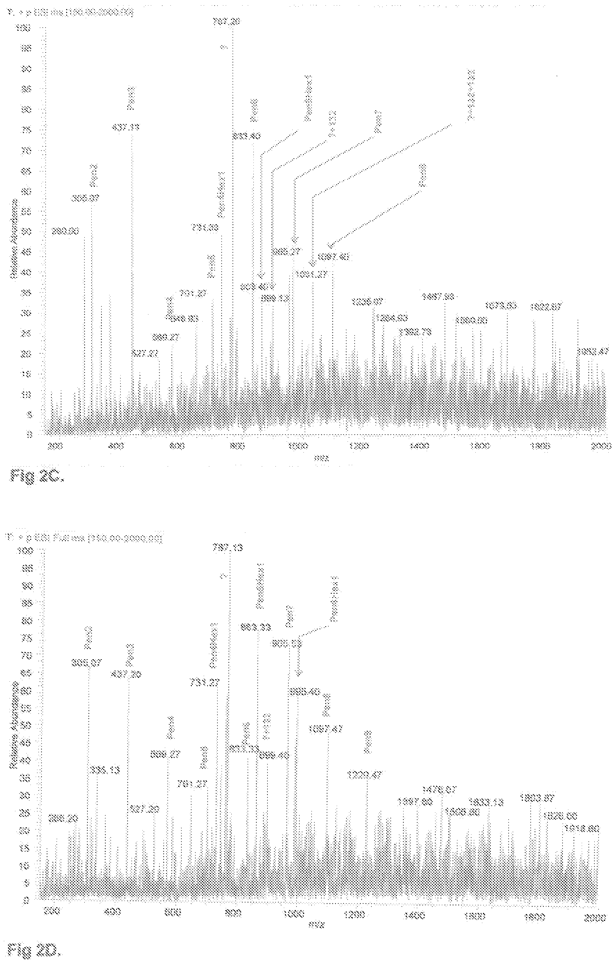

The steam-precooked fine grind is then passed to a cyclone 6, where the waste steam (70°C to 75°C) is vented and separated from the precooked fine grind. Moist-heated fine particles are held in a high-solid conditioner 7, wherein the fine grind is enzymatically conditioned for about 15 to 45 minutes at 60°C to 70°C to further effect a moisture absorption of between 1% to 2% (i.e., below its gelatinization temperature). An enzymatic hydrolysis of the starchy endosperm (amylose and amylopectin polysaccharides) and aleurone-bran fractions (arabinoxylan, glycoprotein and feruloylated-oligosaccharides/FAXX or glycosylated-ferulates, Kroon et al., 1997) promotes a uniform diffusion and hydration of porous starchy and bran granules. This conditioning step is carried out at such high solids content that the mixture is a single phase without visible free water and it does not require stirring during the enzymatic conversion. As shown in FIG. 2A, comparative chromatograms of Arabinoxylan standards (A) and China-Kangwei (B) xylooligosaccharides (XOS) illustrate the enzymatic production of prebiotic linear xylooligosaccharides (DP: 3-8 arabino-xylose oligomers) in whole-corn flour and masa flour. Insoluble fiber is converted by endoxylanase into soluble fiber and to hydrolyze arabinoxylan to linear (DP: 3-8, FIG. 2B) and branched (DP: 5-7, FIG. 2C and 2D) xylooligosaccharides.

A catalytic phenomenon is called homogeneous catalysis when at least one endoenzyme, starchy and bran granules and water constitute a single phase with a first-order bioreaction as the kinetic equation of Michaelis or Langmuir. Hence, the rate of a simultaneous diffusion of water into the granule, where it undergoes an irreversible reaction, proceeds at a rate proportional to its concentration in the granule (*Danckwerts, 1949).* This biocatalytic step also reduces the heat and diffusion barriers and allows the condensed steam and added endoamylase and endoxylanase for a partial digestion while producing soluble dextrins and oligomers from endosperm and aleurone-bran fractions, respectively. An endozyme can decrease peak-viscosities of starchy suspensions by cleaving not only glucan polymers but also oligodextrins from amylose and amylopectin.

Thereafter, the conditioned precooked fine grind is passed through a drier 9 with a fan, whose design is known per se, such that it is mixed with hot air coming from a heater 8 whereby a fuel, such as natural gas, and clean air are used for combustion. The conditioned material is thereby flash dried at a high temperature from 120°C to 190°C for a short time of 0.5 to 2 seconds with the waste hot air vented (60°C to about 80°C with 15% to 18% moisture). The moist-heat sterilization step causes endoenzyme denaturation along with lipid-stabilization for extended shelf-life (e.g., more than 3 months) and further confers to the flour a typical "toasted" aroma. The corn flour is dried to yield a moisture content of 13% to about 15% depending on the desired particle size. If desired, the whole-corn flour can be further heat-pregelatinized down to 9% to 13% moisture to make instantized flour used as a cereal-base ingredient used in foods.

Moisture laden-warm air is removed from the dried enzyme-treated corn material through a cooler 10 with an associated fan, thus further reducing the moisture content with ambient clean air, from about 9-15% down to about 7-12%, depending upon the desired shelf-life of the partial-whole (10-12%) or whole-corn (7-9%) flour. During the moist-heat precooking/high-solid tempering, drying and cooling processing stages a certain degree of particle agglomeration will occur and larger corn particles need to be remilled to achieve a uniform product specification.

After further extraction of the moisture, the cooled and dry material is fed to a secondary mill 11, where the agglomerated material is ground into two fractions, namely, a fine grind ("throughs") and coarse grind ("overtails").

The grind material is directed to a classifier 12 with suitably sized screens (e.g., under 25 to 120 mesh) wherein the fine grind is segregated as corn flour and the coarse grind is further recycled to the secondary mill 11 and thereafter remilled. The remilled is further sieved for producing a homogeneous corn flour for partial-whole (under 25 to 120 mesh) or whole-corn (under 40 to 120 mesh), respectively. The corn flour can be admixed with food-grade or powdered lime added in amount up to about 0.20%, preferably up to 0.10% by weight of lime. If desired, the homogeneous corn flour can be further admixed with food-grade or powdered lime in amount of from about 0.10% to 0.20% by weight, and from about 0.02% to 0.10% (by weight based on flour) to produce a partial-whole (masa) and whole-corn flour, respectively.

The following table gives a biochemical and phytochemical content of whole and partial-whole flours: whole-corn for grain foods (< 40 to 120 mesh) and masa for corn foods (< 25 to 120 mesh). Milled raw-corn (< 25 to 80 mesh) used for flour.

| Table 1. Bio/phyto-chemical content (g/100 g):* Novel Grain flours | | | |
|---|---|---|---|
| Nutrient | *Whole-corn | *Masa | Raw corn |
| Water | 8.0 | 11.0 | 11.0 |
| Protein | 7.8 | 8.6 | 7.5 |
| Fat | 3.3 | 4.0 | 3.8 |
| Ash | 1.3 | 1.4 | 1.2 |
| Calcium | 0.030-0.060 | 0.10-0.16 | 0.01-0.025 |
| Dietary fiber: | 11.0 | 9.0 | 12.0 |
| (Soluble fiber) | (1.1) | (0.5) | (0.2) |
| Crude fiber | 2.0 | 1.5 | 2.3 |
| Niacin: mg | 20 | 15 | 25 |
| Trans-ferulic acid:mg | 1400 | 800 | 1600 |
| (TEAC: µmol Trolox-equivalent or hydrophilic analog of Vitamin-E) | (2000) | (500) | (1000) |
| Starch | 68.6 | 66.0 | 64.5 |
| Total Calories: | 326 | 323 | 312 |

The whole-com and masa (partial-whole) flours both contain granules from the endosperm, germ along with pericarp-bran and aleurone-bran fractions yielding large (25 to 60 mesh) and small (<120 mesh) fractions of a bimodal-size distribution. There is furthermore a potential gain in grain flour yield of 98% and 90% of the total weight of low-moisture precooked com as compared to the continuous corn and masa flour processes which can yield from 65-85% (degermed) to 88-95% (debranned), respectively (U.S. Pat. Nos. 6,326,045 and 6,516,710; U.S. Pat. Nos. 6,344,228 and 6,387,437). Corn grain is either milled or nixtamalized where it loses some bran during its dry-milling or wet-cooking.

If the grain has been processed (e.g. cracked, crushed, rolled, extruded, lightly pearled and/or cooked), the whole-food product should deliver approximately the same essential parts and occurring nutrients in the original grain seed. Therefore the novel flours produced by the present method have, on average, a higher nutritional value as compared to the conventional flours, with a more fat (2-3 fold), dietary fiber (1.5-3 fold: along with ferulic antioxidant as a dietary-biomarker of whole-grain intake, 2-3 fold) and protein (1-1.5 fold) composition than the commercial dry-milled flours (debranned or degermed) used in corn-based foods (INCAP, 1961 and FAO, 1993).

Similar niacin content (15-20 ppm) was found after the low-moisture precooking as compared to the traditional nixtamalization (*Bressani, 1997*) or masa flour processing (13-17 ppm). Pellagra is due to an increasing niacin requirement with a high leucine:isoleucine ratio and low tryptophan (niacin precursor) intake in corn-based diets. Low-moisture precooking (20-25% moisture) using a low-endoenzyme and low-lime addition (0.005% and 0.1-0.2%, respectively) not only aids in avoiding its lipid-oxidation in the germ/bran fractions but also increases its calcium content. If a masa flour (1000-1600 ppm) were produced and a nutrient claim petition was submitted, (*cfsan.fda.gov*), it is estimated that one tortilla serving would supply between 15% and 25% of the daily calcium requirement (160-260 mg/serving/day: 30 grams or 0.6 oz-masa flour: USDA-SR16 for 7-in com tortilla serving with 45% moisture).

The F.D.A.-Modernization Act, admitting it had neither the time nor the resources, ruled in 1997 that companies could make their own self-affirmed GRAS claims and then send a notice to the F.D.A. for possible approval (GRAE or generally recommended as efficacious). It can take 2 to 5 years for a company to gain a health claim from the F.D.A. in the labeling of food or dietary supplements ((a) Structure/Function claims-or European type A equivalent-, (b) Significant Scientific agreement - S.S.A., and (c) Qualified health claims - or type B).

In this method, the novel low-moisture precooking results in a reduction of 40% to 80% in water and energy consumption with correspondingly minimum environmental costs, as compared to the recent industrial masa-flour methods (U.S. Pat. Nos. 6,516,710 and 6,344,228, MX/PA/a/2001/012210 or US2003/198725).

The following table shows the physico-chemical properties of whole and partial-whole corn flours: whole-corn for grain foods (< 40 to 120 mesh) and masa for corn foods (< 25-100 mesh). Milled raw-corn (< 25-80 mesh) used for flour.

| Table 2. Physico-chemical properties: * Novel Grain flours | | | |
|---|---|---|---|
| Property | *Whole-corn | *Masa | Raw corn |
| Moisture (%) | 8.0 | 11.0 | 11.0 |
| Yield (g-dough/100g) | 1600-1900 | 1900-2400 | 1300-1500 |
| Adhesivity | 0.6 | 0.5 | 0.0 |
| pH(11% solids) | 6.4 | 6.9 | 6.1 |
| Apparent-viscosity (RVA-4/14% solids): | | | |
| Peak (cps/95°C) | 1100 | 3400 | 3500 |
| Through (cps/95°C | 700 | 2400 | 3200 |
| Final (cps/50°C) | 1800 | 5600 | 7400 |
| Pasting temp. (°C) | 80 | 78 | 74 |
| Peak time(min/95°C) | 5.6-6.0 | 5.0-5.5 | 6.1-7.0 |

The whole-corn and masa (partial-whole) flours can include coarse (25 to 60 mesh) and fine (<120 mesh) particles. The large-sized granules are pieces of pericarp-bran, endosperm and germ. The small-sized ones are mostly starchy endosperm, germ and aleurone-bran pieces. Thus, a bimodal-size distribution and biochemical composition both affect not only the physico-chemical properties (apparent-viscosity and adhesivity) of a corn dough but also its yield (water uptake) for grain-foods. Commercial masa flours for same applications (snack and tortilla) can have different physical, chemical and pasting properties. Nixtamalized coarse flour (>20 mesh) had a low-peak viscosity and fine flour (<100 mesh) showed a high-peak viscosity, suggesting that coarse-flour (for snacks) hydrate more slowly and develop less viscosity *(Gomez et al*. *1991).*

In this method, the yield for masa flour is higher than whole-corn flour and raw-flour, because both low-moisture precooking and heat treatments mainly cause a partial starch gelatinization and protein denaturation. However its masa peak-viscosity was lower than raw-flour but higher than corn peak-viscosity reflecting a low-degree of starch modification for a pregel flour. On the other hand, a high-degree of modification for an instant flour was detected not only for its low-yield but also for its low-peak viscosity showing both low-moisture precooking and high-solid enzymatic treatment effects.

### EXAMPLE 1

### Preparation of corn-based foods using a pregel masa flour as a cereal-base ingredient:

The pregel masa and partial whole-flour made from the presented method can be rehydrated with warm water from a 1:0.9 to about 1:1.4 weight ratio for a high-yield masa dough (50% to 60% final moisture) used in the preparation of industrial com-snacks and commercial tortilla-baked foods.

The masa flour contained on average about 9% of dietary fiber (0.5% soluble fiber or low molecular weight linear (DP: 3-8, FIG. 2B) and branched acidic xylooligosaccharides (DP: 5-7, FIG. 2C and FIG. 2D). with a degree of polymerization of the oligosaccharides, DP: 3-8, FIG. 2B) and a trans-ferulic content of 800 ppm (or expressed as 500 TE or µmol trolox-equivalent/100 g), which was 50% lower than raw-corn flour (1600 ppm and 1000 TE). Wu et al. (2004) and the USDA (November, 2007) measured hydrophilic and lipophilic antioxidants (total ORAC-oxygen radical absorbance capacity as µmol TE/100g and total phenolics-TP as mg-gallic acid equivalents/100g) of common foods such as: tortilla chips-reduced fat (1704 and 304), yellow sweet corn (728 and 211), corn flakes-General Mills (2,359 and 842), popcorn-Pop secret (1,743 and 117), blue corn meal (684 and 77), whole-grain bread (1,421 and 171), oat bran-Quaker (1,886 and 163), rice bran-crude (24,287 and 667) and black bean (8040 and 880). Phenolic compunds are believed to account for a major portion of the antioxidant capacity in many plants (fruits, vegetables, nuts, cereals and spices). Ferulic was the predominant phenolics antioxidant and it was removed with the corn-bran along with niacin (40% decrease) during milling for a masa flour. It is possible that a 10%-40% loss of ferulic occurred during lye-hydrolysis (1-4h/2N: *Adom and Liu, 2002*) and a higher 93% loss during lime-cooking (1h cook, 15h steep with 0.75% w/v: *Martinez-Bustos et al. 2001).*

This pregel partial-whole flour had a higher ferulic content than dry-milled yellow-corn (209 ppm) and similar debranned grain-flours (wheat, oat and brown-rice: 59, 55 and 63 ppm: *Sosulski et al*. 1982). The total phenolic content has been directly related to the total antioxidant activity and a high correlation between phenolics and ferulic content for bound-extracts reflect the major contribution of ferulic to total phenolic-acids in grains, fruits and vegetables (ie., derivatives of hydroxycinnamic-ferulic/caffeic- and hydroxybenzoic-protocatechuic/gallic- acids, anthocyanidins, flavones, flavanones and flava-o/nols).

It is estimated that corn tortilla per capita consumption in Mexico and Central America is around 240 grams/day (8 tortillas or 150 flour grams) accounting for at least a 20% of the daily calorie and calcium intake (AACC, 2001 and SSA, 2005). Therefore, a masa-flour tortilla will provide about 1.5 fiber grams/serving and three-tortilla servings (50 grams or 1.8 oz-masa flour: USDA-SR16 for 7-in corn tortilla with ≥45% moisture content) would supply at least 18% of the FDA daily fiber value (25 grams: *cfsan.fda.gov*). A commercial nixtamalized corn flour (Maseca® regular) can contain between 7-9% dietary fiber and 6-8% insoluble-fiber (*Bressani, 1997* and U.S. Pat. No. 6,764,699).

However, the F.D.A. specifies whole-grain products as those meeting the criterion of 51%-61% whole-grain definition by weight on wheat (12.5% fiber), barley (10% fiber), oats (11% fiber), white-rice and brown-rice (1.8% and 3.5%). Specifications for nixtamalized-corn flour (masa) and whole-grain corn meal (>7.3%) as well is still pending (*Anderson* 2004, AACC, 2005, 2006). The food-guide pyramid (2005) suggests eating half of your grains whole (6 oz. or grain-servings/day with 4.5 fruit and vegetable cups/day for a 2000 calorie-diet: *Mypyramid.gov*). Furthermore, a lower consumption of energy-dense foods (high-fat/protein and high-sugar or high-starch) and soft-drinks (high-free sugar) will also reduce the total daily calories to maintain a healthy-weight.

An industrial lime-treated corn bran (Maseca®: >50% fiber, >3% soluble fiber, >2% fat, >5000 ppm-ferulic and >500 ppm-sitosterol) contained 4-5% unsaponifiable matter with a total sterol content of 880 ppm and this represents about 50% of a dry-milled corn germ content (Arbokem, 2000). At least 40 % of the phytosterols from the nixtamalized corn bran were esterified representing >350 ppm which was similar to a dry-milled corn bran with 450 ppm of fatty-acyl esters (with 4200 ppm-ferulic: *Yadev et al*. *2006*). Corn fiber oil has three natural phytosterols such as free sterol (i.e., β-sitosterol can interfere cholesterol absorption), sterol ferulate ester, and sterol fatty-acyl ester. These sterols have been found to lower serum cholesterol in blood and can be used as a nutraceutical (U.S. Pat. No. 6,677,469). Oryzanol, a mixture of steryl-ferulate esters is extracted from the unsaponifiable matter (UM) of rice-bran oil refining (2570 ppm: 822 ppm-ferulic equivalent). This industrial bran-byproduct is mainly a mixture of sterols and γ-oryzanol (43% and 28% in UM) and stabilized rice-bran (21% fiber, 22.4% fat with 4.1% UM) can be sold as a health food ingredient (>$4/k: *Kahlon et al*. *2004*).

The predominant dietary phenols in cereal-grains are phenolic acids and ferulic acid is present in the cell walls localized in the aleurone-bran and pericarp fractions. Corn bran (*Plate et al*. *2005, Andreasen et al*. *2001 and Stone, 2006*) is one of the best sources of ferulic (31,000 ppm and 5,000-diferulic) as compared to rice (9,000 ppm), wheat (4,500-6,600 ppm and 1,000-diferulic/bran; 18,500 ppm-ferulic/aleurone) and barley (1,400).

### EXAMPLE 2

### Preparation of grain-based foods using an instant whole-corn flour as a cereal-base and functional-food ingredient:

The instant and whole-flour obtained from the aforementioned process can be uniformly mixed with 29% to 49% by weight grain flour in order to increase its ingredient formulation from about 70% to about 80% of dietary fiber and from 800% to about 1400% of phenolics antioxidant. The whole-flour can be rehydrated with warm water from a 1:0.6 to about 1:0.9 weight ratio for a low-yield corn dough (40% to 50% final moisture) used in the preparation of novel wheat-based and grain-based foods.

Furthermore, a whole-grain flour substitution (i.e., flat-bread) will provide an additional 0.98 to 1.36 fiber grams/serving and three flour-tortilla servings (52 grams or 1.9 oz whole-grain flour: USDA-SR16 for a whole-wheat bread with ≤38% moisture content) would supply about 12% to 16% of the FDA daily fiber value (*cfsan.fda.gov*).

The Whole Grain Stamp was launched in 2005 and the Original Phase I stamps carried the words "Good source" for products with 50% or more of whole grain content, and "Excellent source" for products with 100% whole-grain. A year-and-a-half later, Phase II was launched for whole-grain foods with stamps stating either a whole-grain with >50% or a 100% whole-grain content per labeled serving/allowance (*wholegrainscouncil.org*).

The instant whole-flour had about 11% dietary fiber (1.1% soluble fiber) and low molecular weight linear xylooligosaccarides with a degree of polymerization (DP) of 3-8 (FIG. 2B), and/or branched xylooligosaccarides (acidic XOS) with a degree of polymerization (DP) of 5-7 (FIG. 2C and FIG. 2D), and a trans-ferulic content of about 1400 ppm. This was slightly lower than raw corn (1600 ppm) indicating a 10-15% heat-degradation. However its antioxidant activity was significantly higher (2000 TE) than raw corn (1000 TE) and masa flour (500 TE) indicating an increased enzymatic-hydrolysis (100%), which solubilized the ferulic from the ferulate-oligosaccharides in the aleurone-bran and pericarp-bran fractions. This instant whole flour had a similar ferulic content than a lab-milled yellow corn (1760 ppm) but a higher content than other whole-grain flours (wheat, oat and brown-rice: 650, 360 and 300 ppm: *Adom and Liu, 2002*). The dietary-bran particles are not broken during milling. Because they are not susceptible to enzymatic digestion in the small intestines, nutrients remain unavailable until they reach the large intestine. Insoluble bound-phenolics (5,000 ppm-ferulic) can be microbially digested (40%) in the colon. The extent of solubilization of ferulolylated oligosaccharides (50%) was higher than the overall solubilization of wheat-bran polysaccharides (*Kroon et al*. *1997*). These bound phenolic acids, mainly in β-glicosides (as the xylooligosaccharides with a degree of polymerization ≥3, for example, as shown in FIGS. 2B - 2D), cannot be digested by human enzymes and could survive stomach and small intestine digestion to reach the colon, providing immune health (EP1733730) and maintaining gastrointestinal health. The Federation of American Societies for Experimental Biology (FASEB, 1987 and American Dietetic Association, 2007: *foodproductdesign.com*) recommends a fiber intake that is 66-75% insoluble and 25-34% soluble, a proportion that represents the types found in a normal, mixed diet of foods (fruits, vegetables and whole grains:20-35 g/day).

About 69% of the ferulic acid present in yellow sweet-corn are insoluble-bound glycosides (1700 ppm dry basis), with ferulic being the major compound esterified to heteroxylan side-chains (700-1500 in commercial white, 1600-1800 in black/blue and 1000-1800 ppm in commercial yellow corn). Dewanto et al. (2002) have showed that sweet-corn thermal processing (at 115°C for 25 min) significantly elevated the total antioxidant activity by 44% and increased phytochemical content of ferulic acid by 550% (liberated from soluble esters and glycosides) and total phenolics by 54%. Thus, due to solubilization of phenolics, heat treatment enhanced the sweet-corn antioxidant activity despite its significant 25% vitamin-C loss. Ferulic acid was mainly present in the bound form. The free, soluble-conjugated or esterified, and insoluble-bound or glycosylated forms were in the ratio 0.1:1:100. Flavonoids and ferulic acid contribute to total phenolics in corn, wheat, oats and rice. The contribution of bound ferulic to bound phenolics was 76% in corn, 61% in wheat, 43% in whole-oats and 47% in whole-rice *(Adom and Liu, 2002).* A practical way to use bound-ferulate and phytophenols as analytical dietary-biomarkers for whole grain consumption and polyphenol-rich plant extracts (i.e., pycnogenol®) may require a number of years to develop (*Virgill et al,. 2000 and AACC, 2006).*

Whole-grain products retain both bran and germ by providing antioxidant phenolic-acids (trans/cis-ferulic, diferulic, p-coumaric and caffeic) and phytic acid-acting independently/synergistically with dietary fiber- to reduce the risk (30% with 3-servings/day) of cardiovascular/coronary diseases (CVD/CHD), colon cancer and diabetes type-II (*Miller et al*. *2000, Decker et al*. 2002, *Ou et al*. *2004 and Jones, 2006*). Several epidemiological studies have consistently defined whole grains as those foods that comprise more than 25% whole-grain content or bran by weight (Liu, 2003). FDA's 2003 Consumer Health Information for Better Nutrition Initiative provides for the use of qualified health claims when there is emerging evidence for a relationship between a food, food component, or dietary supplement and reduced risk of a disease or health-related condition (*cfsan.fda.gov*). Attempts to develop methods for assaying activity against reactive oxygen species (ROS) for novel health claims are fully justified by their implication in the pathogenesis of several chronic diseases and age-related diseases. However, modern diets (red-meat, high-fat dairy/butter, refined grains) also contain pro-oxidants, including iron/copper, hydrogen peroxide, haem, lipid peroxides/aldehydes. These pro-oxidants affect the gastrointestinal tract by inducing stomach, colon and rectal cancer.

Ferulic acid is a known phenolic antioxidant, being an effective scavenger of free radicals (An ABTS radical scavenging assay showed an IC₅₀ or 50% inhibition value of 3.3 ppm for ferulic and 1.5 ppm and gallic as a positive-control: Intasa-Chromadex™ analytical test report, 2006). Kikuzaki et al. (2002) previously published the DPPH radical-scavenging and increasing inhibition effects of ferulic, oryzanol (steryl-ferulate), BHT, α-tocopherol (Trolox) and gallic acid (27%< 21%< 29%< 42% < 76%). A TEAC test was defined as the concentration of Trolox solution with equivalent antioxidant capacity to a 1 mM concentration of the compound (*Rice-Evans et al*. *1996*). Similar increasing values were found for α-tocopherol (Trolox), caffeic, ferulic and gallic acid (1.0 < 1.3 < 1.9 < 3.0). It also reflects the ability of hydrogen-donating antioxidants to scavenge the ABTS-radical. However, Davalos et al. (2004) used a different ORAC-FL (Oxygen radical absorbance capacity) test which described the µmol trolox equivalents per µmol of pure compound: BHA (synthetic), ferulic and protocatechuic (similar to gallic) with increasing values of 2.4, 4.5 and 6.7, respectively. This latter assay has been largely applied to assess free radical scavenging capacity of human plasma, proteins, DNA, pure antioxidant compounds and new antioxidants from plant and food extracts (*Prior et al*. *1999*). Examples of generally accepted whole grain flours and foods are: amaranth, barley, brown and colored rice, buckwheat, bulgur, corn (sweet and pop) and whole cornmeal, emmer/farro, grano, kamut grain and spelt, oatmeal and whole oats, quinoa, sorghum, triticale, whole rye, whole or cracked wheat, wheat berries and wild rice. A Novel Wheat Aleurone (GrainWise™: 6,600 µmol TE/100g: 46% fiber) can enhance a wheat flour (with a 20% addition) antioxidant content with 1320 TE . A Whole grain wheat cereal contained 2900 TE whereas commercial bran and germ had 8,500 and 5,000 TE (DPPH assay defined TE as µmol trolox equivalent/100 grams, Miller et al. 2000). Whole grain bread had a higher 2000 TE as compared to white bread at 1200 TE.

Whole-grain flours contained a higher ferulic acid concentration (after an alkaline-enzymatic hydrolysis: *Gamez and Sanchez 2006)* than their industrially refined flours: a) whole-wheat with 280-840 ppm (Selecta saludable®:harina de trigo integral and Nutri® integral) and refined-wheat with 35-60 ppm (*Sosulski et al*. *1982*); and b) whole-rice with 450 ppm (Arroz SOS® integral) and milled Brown/milled rice (310-70 ppm: *Zhou et al*. *2004*). Therefore, the functional food industry has an opportunity to provide a functional-based (reduced risk of oxidative damage with polyphenols-including phenolic/ferulic, p-coumaric and protocatechuic acids- as a defense against reactive oxidative species: structure/function or qualified health claim) rather than a product-based claim while keeping its shelf-life stability (>3 months). A challenge is to make these cereal-based foods (along with low-fat/cholesterol diets) more appealing than refined-grains and communicate to the population their healthier attributes. A third generation of functional-food ingredients with dietary antioxidant function and reduced risk of disease must comply with scientific basis whereby they are based on bound-phenolics and ferulic-biomarker for health claims.

It has been reported that ferulic could protect low-density lipoproteins and lipid from oxidative damage, exhibited anti-inflammatory properties and inhibited in-vitro carcinogenesis (MCF-7 breast and Caco-2 colon cancer cells inhibition or proliferation by ferulic acid (Sigma-Aldrich®)-EC₅₀ of 130 to 390 ppm-, whole-corn flour extracts-EC₅₀ of 350 to 550 ppm- and corn-bran extract- EC₅₀ of 250 to 400 ppm-:Intasa-ITESM® analytical test report, 2006). The incidence of colon cancer has been attributed to the high-fat/low-dietary fiber diet resulting from a convenient and refined-grain lifestyle while losing the benefits of carcinogens absorption, bile acids dilution, reduced mutagenicity and increased stool-volume. A 4-year dietary study (25 g/day of wheat-biscuit with 30% bran) showed a significant increase in colorectal adenoma tumors. However, consumption of *Lactobacillus casei shirota* (30 billion cells/3g/day: Yakult®) reduced the new tumors (*Ishikawa et al*. *2005*)*.* A novel probiotic-cereal (Kashi® Vive™: *kashi.com*) was made with 8-grains fiber (corn meal/dry milk) and probiotics (*L. acidophilus, L.casei*: 1 billion cells per 55g-serving).

In the United States, ferulic acid is currently not GRAS accepted and it lacks FDA or FEMA approval. Therefore, it cannot be used as a food additive, cosmetic, or pharmaceutical. Also, in the United States, Japan (food antioxidant) and most European countries, numerous medicinal essences and natural extracts of herbs, coffee, vanilla, beans (ie. black bean hull raw-extract with 1000 ppm-phenolics as gallic, 58 µmol-TE/g, 2.5 ORAC-value and EC₅₀ of 120 to 130 ppm: US 2006024394), spices, and novel botanicals (ie. pine bark extract with 1800 ppm-ferulic acid: U.S. Pat. No. 4,698,360) are selected for their high content of ferulic acid and other phenolics and added to a food as an FDA-petitioned antioxidant concoction. No acute or chronic side effects of ferulate ingestion or topical applications have ever been reported. Therefore, increasing evidence for its health benefits (ie. tumor growth repressor and enzyme modulator) is likely to inspire future clinical trials and a change in its FDA status within the next 5 to 10 years (*Graf, 1992*). Antioxidant inhibition of free radicals provides two prophylactic or ameliorating effects: 1) suppression of radical formation and 2) scavenging radical and inhibiting DNA damage that could lead to initiation/propagation of cancer cells or lipid oxidation, which leads to cardiovascular-atherosclerosis- and coronary-artery- diseases. About 35% of cancer deaths in the USA are diet related and increasing dietary fiber intake will reduce some forms of cancer and coronary heart disease, diabetes-type II and diverticulitis of the colon walls (TDF: Medallion®,2007).

Therefore, this whole-grain flour can be further used as a cereal-base and multifunctional ingredient during the standard manufacture of reduced gluten (soft/hard wheat, barley, rye and oats) and grain-based foods such as: bar (fruit), biscuit, cookie, cracker, baked-snack (breakfast, savory, 3G: half-products and pellet), flat-bread (pita), flour-tortilla (table-tortilla, chapatti, roti, naan), bakery (bread, bagel, pizza/pie-crust, pretzel, doughnut, breading), crumpet, muffin, empanada, waffle/pancake (french-crêpes, scottish-bannocks, american-flapjacks and russian-blinis), bulgur/pilaf, pasta/ravioli, dumpling, noodle, gruel (a thin-porridge beverage: kenkey-Ghana-, ogi-Nigeria-, uji-Kenya and mageu-South Africa).

From the foregoing, it will be apparent that it is possible to manufacture pregelatinized and instant corn flours with an efficient and novel continuous process comprising a moist-heat precooking and high-solid enzymatic treatment yielding masa flour for corn-based and whole-corn flour for grain-based foods, wherein some of the biochemical and phytochemical nutrients, water and energy losses would have been present but for the features of this invention are prevented.

## Claims

1. A process for making flour, comprising:
(i) combining a wet-milled whole corn fraction composed of endosperm, germ and aleurone-bran with at least one enzyme selected from the group consisting of an endoamylase and endoxylanase, to produce an enzyme-added fraction;
(ii) moist-heat precooking said enzyme-added fraction to obtain a pre-cooked enzyme-added fraction;
(iii) high-solid conditioning said precooked enzyme-added fraction to partially hydrolyze starchy endosperm and aleurone-bran granules to produce acidic xylooligosaccahrides in enzymatically conditioned corn kernel particles; and
(iv) milling said conditioned corn kernel particles to obtain flour.

2. The process of claim 1, wherein said at least one enzyme is admixed in an amount up to 0.10% by weight of the wet-milled whole corn fraction.

3. The process according to claim 1, further comprising sieving said flour from step (iv) with a 25 to 120 mesh to obtain a pregel corn flour.

4. The process according to claim 1, further comprising sieving said flour from step (iv) with a 40 to 120 mesh to obtain an instant whole-corn flour.

5. The process according to claim 3, further comprising a step of admixing said pregel corn flour with 0.1% to 0.2% by weight of lime to obtain a masa flour.

6. The process according to claim 4, further comprising a step of admixing said instant whole-corn flour with up to 0.1% by weight lime to obtain whole-corn flour.

7. The process according to claim 1, wherein said moist-heat precooking step (ii) comprises cooking a stream of said enzyme-added fraction at a temperature of 100°C to 170°C to effect a partial starch gelatinization and protein denaturation.

8. The process according to claim 1, wherein said moist-heat precooking step (ii) further comprises a step of injecting saturated steam under pressure into a stream of said enzyme-added fraction as said enzyme-added fraction enters the precooker, heating and hydrating particles of said enzyme-added fraction to a moisture content of 20% to 25% for 0.2 to 1 seconds.

9. The process according to claim 1, wherein said wet-milled whole corn fractionis obtained by providing cleaned grain, preconditioning said cleaned grain with spray water to produce wetted whole grain, grinding said wetted whole grain by abrading bran portions loose therefrom, and wet-milling said wetted whole grain into two fractions, a first fraction being the wet-milled whole corn fraction composed of endosperm, germ and aleurone-bran, and a second fraction composed of endosperm, germ and pericarp-bran.

10. The process according to claim 9, further comprising sifting and aspirating said first and second fractions before said combining step (i).

11. The process according to claim 1, further comprising a step of venting said precooked enzyme-added fraction prior to said high-solid conditioning step (iii).

12. The process according to claim 1, further comprising hot-air drying said enzymatically conditioned corn kernel particles to produce further gelatinization and endoenzyme activity prior to inactivating said endoenzyme and milling said conditioned corn kernel particles.

13. The process according to claim 9, further comprising a step of remilling the second fraction.

14. The process according to claim 5, further comprising:
rehydrating said pregel corn flour with warm water to a weight ratio in a range of 1:0.9 to 1:1.4 to form a masa dough; and
making at least one corn-based food with said dough.

15. The process according to claim 6, further comprising:
admixing said instant whole-corn flour with 29% to 49% by weight grain flour, to produce a whole-grain flour;
manufacturing at least one grain-based food using the whole-grain flour as a cereal-base and functional-food ingredient.

16. The process according to claim 15, wherein the whole grain flour is selected from the group consisting of durum-wheat, hard-wheat, soft-wheat, red-wheat, rice, brown rice, white-corn, yellow-corn, blue-corn, quality-protein maize, barley, rye, oat, millet, sorghum, red-sorghum, purple-sorghum, teff, triticale, buckwheat, amaranth and quinoa.

17. The process according to claim 1, wherein said at least one enzyme is in the form of a powder.

18. A process of making flour, comprising:
(i) preconditioning a cleaned corn kernel with spray water to produce wetted whole corn kernel;
(ii) grinding said wetted whole corn kernel by abrading bran portions loose therefrom and milling the wetted whole corn kernel into two fractions, a first fraction composed of endosperm, germ and aleurone-bran and a second fraction composed of endosperm, germ and pericarp-bran;
(iii) sifting and aspirating said first fraction and said second fraction;
(iv) regrinding said second fraction;
(v) mixing said sifted and aspirated first fraction with a powder comprising at least one enzyme selected from the group consisting of endoamylase and endoxylanase to produce an enzyme-added fraction;
(vi) moist-heat precooking said enzyme-added fraction by injecting a stream of saturated steam to produce a steam-precooked enzyme-added fraction;
(vii) venting said steam-precooked enzyme-added fraction;
(viii) high-solid conditioning said steam-precooked enzyme-added fraction to partially hydrolyze starchy endosperm and aleurone-bran granules thereof, producing acidic xylooligosaccharides in enzymatically conditioned corn kernel particles;
(ix) hot-air drying said enzymatically conditioned corn kernel particles, producing dried corn kernel particles;
(x) cooling and further drying said dried corn kernel particles with clean air while venting moist air; and
(xi) milling said cooled and dried corn kernel particles to obtain a flour.

## Patentansprüche

1. Verfahren zum Herstellen von Mehl, umfassend:
(i) Kombinieren einer nass vermahlenen Maisvollkornfraktion, bestehend aus Endosperm, Keim und Aleuronkleie, mit mindestens einem Enzym, ausgewählt aus der Gruppe bestehend aus einer Endoamylase und Endoxylanase, zur Herstellung einer Fraktion mit zugesetztem Enzym;
(ii) Feuchtwärmevorkochen der Fraktion mit zugesetztem Enzym, um eine vorgekochte Fraktion mit zugesetztem Enzym zu erhalten;
(iii) Konditionieren von Feststoffen der vorgekochten Fraktion mit zugesetztem Enzym, um stärkehaltiges Endosperm und Aleuronkleiegranulate teilweise zu hydrolysieren, um saure Xylooligosaccharide in enzymatisch konditionierten Maiskornteilchen herzustellen; und
(iv) Mahlen der konditionierten Maiskornteilchen, um Mehl zu erhalten.

2. Verfahren nach Anspruch 1, wobei das mindestens eine Enzym in einer Menge von bis zu 0,10 Gew.-% der nass vermahlenen Maisvollkornfraktion zugemischt wird.

3. Verfahren nach Anspruch 1, ferner umfassend das Sieben des Mehls aus Schritt (iv) mit einem 25 bis 120 Mesh, um ein Pregel-Maismehl zu erhalten.

4. Verfahren nach Anspruch 1, ferner umfassend das Sieben des Mehls aus Schritt (iv) mit einem 40 bis 120 Mesh, um ein Instant-Maisvollkornmehl zu erhalten.

5. Verfahren nach Anspruch 3, ferner umfassend einen Schritt des Vermischens des Pregel-Maismehls mit 0,1 bis 0,2 Gew.-% Kalk, um ein Masamehl zu erhalten.

6. Verfahren nach Anspruch 4, ferner umfassend einen Schritt des Zumischens des Instant-Maisvollkornmehls mit bis zu 0,1 Gew.-% Kalk, um Maisvollkornmehl zu erhalten.

7. Verfahren nach Anspruch 1, wobei der Feuchtwärmevorkochschritt (ii) das Kochen eines Stroms der Fraktion mit zugesetztem Enzym bei einer Temperatur von 100° C bis 170° C umfasst, um eine partielle Stärkegelatinierung und Proteindenaturierung zu bewirken.

8. Verfahren nach Anspruch 1, wobei der Feuchtwärmevorkochschritt (ii) ferner einen Schritt des Einspritzens von Sattdampf unter Druck in einen Strom der Fraktion mit zugesetztem Enzym umfasst, wenn die Fraktion mit zugesetztem Enzym in den Vorkocher eintritt, Erwärmen und Hydratisieren von Partikeln der Fraktion mit zugesetztem Enzym auf einen Feuchtigkeitsgehalt von 20 % bis 25 % für 0,2 bis 1 Sekunde.

9. Verfahren nach Anspruch 1, wobei die nass vermahlene Maisvollkornfraktion erhalten wird, indem gereinigtes Getreide bereitgestellt wird, das gereinigte Getreide mit Sprühwasser vorkonditioniert wird, um befeuchtetes Vollkorn zu erzeugen, das befeuchtete Vollkorn durch Abschleifen von Kleieteilen, die davon getrennt sind, vermahlen wird, und das befeuchtete Vollkorn in zwei Fraktionen nass vermahlen wird, wobei eine erste Fraktion die nass vermahlene Maisvollkornfraktion aus Endosperm, Keim und Aleuronkleie ist und eine zweite Fraktion aus Endosperm, Keim und Perikarpkleie besteht.

10. Verfahren nach Anspruch 9, ferner umfassend das Sieben und Absaugen der ersten und zweiten Fraktion vor dem Kombinierschritt (i).

11. Verfahren nach Anspruch 1, ferner umfassend einen Schritt des Entlüftens der vorgekochten Fraktion mit zugesetztem Enzym vor dem Schritt des Konditionierens von Feststoffen (iii).

12. Verfahren nach Anspruch 1, ferner umfassend das Heißlufttrocknen der enzymatisch konditionierten Maiskornteilchen, um weitere Gelatinisierung und Endoenzymaktivität zu erzeugen, bevor das Endoenzym inaktiviert und die konditionierten Maiskornteilchen vermahlen werden.

13. Verfahren nach Anspruch 9, ferner umfassend einen Schritt des Wiedervermahlens der zweiten Fraktion.

14. Verfahren nach Anspruch 5, ferner umfassend:
Rehydrieren des Pregel-Maismehls mit warmem Wasser zu einem Gewichtsverhältnis in einem Bereich von 1:0,9 bis 1:1,4, um einen Masateig zu bilden; und
Herstellen von mindestens einem Nahrungsmittel auf Maisbasis mit dem Teig.

15. Verfahren nach Anspruch 6, ferner umfassend:
Vermischen des Instant-Maisvollkornmehls mit 29 bis 49 Gew.-% Getreidemehl, um ein Vollkornmehl herzustellen;
Herstellung von mindestens einem Nahrungsmittel auf Getreidebasis unter Verwendung des Vollkornmehls als eine/n Getreidebasis und funktionellen Nahrungsmittelzusatzstoff.

16. Verfahren nach Anspruch 15, wobei das Vollkornmehl ausgewählt wird aus der Gruppe bestehend aus Durumweizen, Hartweizen, Weichweizen, rotem Weizen, Reis, Naturreis, weißem Mais, gelbem Mais, blauem Mais, Qualitätsproteinmais, Gerste, Roggen, Hafer, Hirse, Sorghum, rotem Sorghum, violettem Sorghum, Tef, Triticale, Buchweizen, Amaranth und Quinoa.

17. Verfahren nach Anspruch 1, wobei das mindestens eine Enzym in Form eines Pulvers vorliegt.

18. Verfahren des Herstellens von Mehl, umfassend:
(i) Vorkonditionieren eines gereinigten Maiskorns mit Sprühwasser zur Herstellung von befeuchtetem Maisvollkornkorn;
(ii) Mahlen des befeuchteten Maisvollkornkorns durch Abschleifen von Kleieteilen, die davon getrennt sind, und Mahlen des befeuchteten Maisvollkornkorns in zwei Fraktionen, eine erste Fraktion, die aus Endosperm, Keim und Aleuronkleie besteht, und eine zweite Fraktion, die aus Endosperm, Keim und Perikarpkleie besteht;
(iii) Sieben und Absaugen der ersten Fraktion und der zweiten Fraktion;
(iv) Nachmahlen der zweiten Fraktion;
(v) Mischen der gesiebten und abgesaugten ersten Fraktion mit einem Pulver, das mindestens ein Enzym umfasst, das aus der Gruppe bestehend aus Endoamylase und Endoxylanase ausgewählt wird, um eine Fraktion mit zugesetztem Enzym herzustellen;
(vi) Feuchtwärmevorkochen der Fraktion mit zugesetztem Enzym durch Einspritzen eines Sattdampfstroms, um eine dampfvorgekochte Fraktion mit zugesetztem Enzym herzustellen;
(vii) Entlüften der dampfvorgekochten Fraktion mit zugesetztem Enzym;
(viii) Feststoffreiches Konditionieren der dampfvorgekochten Fraktion mit zugesetztem Enzym, um stärkehaltiges Endosperm und Aleuronkleiegranulate davon teilweise zu hydrolysieren, um saure Xylooligosaccharide in enzymatisch konditionierten Maiskornteilchen herzustellen;
(ix) Heißlufttrocknen der enzymatisch konditionierten Maiskornteilchen, wodurch getrocknete Maiskornteilchen hergestellt werden;
(x) Kühlen und weiteres Trocknen der getrockneten Maiskornteilchen mit sauberer Luft, während feuchte Luft abgelassen wird; und
(xi) Mahlen der gekühlten und getrockneten Maiskornteilchen, um Mehl zu erhalten.

## Revendications

1. Procédé de fabrication de farine, comprenant :
(i) la combinaison d'une fraction de maïs complet broyée par voie humide composée d'endosperme, de germe et d'aleurone-son avec au moins une enzyme choisie parmi le groupe composé d'une endoamylase et d'une endoxylanase, pour produire une fraction avec ajout d'enzymes ;
(ii) la précuisson à la chaleur humide de ladite fraction avec ajout d'enzymes pour obtenir une fraction avec ajout d'enzymes précuite ;
(iii) le conditionnement à haute teneur en solides de ladite fraction avec ajout d'enzymes précuite pour hydrolyser partiellement l'endosperme amylacé et des granules d'aleurone-son afin de produire des xylooligosaccharides acides dans des particules de grain de maïs conditionnées de manière enzymatique ; et
(iv) le broyage desdites particules de grain de maïs conditionnées pour obtenir de la farine.

2. Procédé selon la revendication 1, dans lequel ladite au moins une enzyme est mélangée en une quantité allant jusqu'à 0,10 % en poids de la fraction de maïs complet broyée par voie humide.

3. Procédé selon la revendication 1, comprenant en outre le tamisage de ladite farine issue de l'étape (iv) avec une maille de 25 à 120 pour obtenir une farine de maïs prégélatinisée.

4. Procédé selon la revendication 1, comprenant en outre le tamisage de ladite farine issue de l'étape (iv) avec une maille de 40 à 120 pour obtenir une farine de maïs complet instantanée.

5. Procédé selon la revendication 3, comprenant en outre une étape de mélange de ladite farine de maïs prégélatinisée avec 0,1% à 0,2 % en poids de chaux pour obtenir une farine masa.

6. Procédé selon la revendication 4, comprenant en outre une étape de mélange de ladite farine de maïs complet instantanée avec jusqu'à 0,1 % en poids de chaux pour obtenir une farine de maïs complet.

7. Procédé selon la revendication 1, dans lequel ladite étape de précuisson à la chaleur humide (ii) comprend la cuisson d'un flux de ladite fraction avec ajout d'enzymes à une température de 100 °C à 170 °C pour effectuer une gélatinisation partielle de l'amidon et une dénaturation des protéines.

8. Procédé selon la revendication 1, dans lequel ladite étape de précuisson à la chaleur humide (ii) comprend en outre une étape d'injection de vapeur saturée sous pression dans un flux de ladite fraction avec ajout d'enzymes lorsque ladite fraction avec ajout d'enzymes pénètre dans le dispositif de précuisson, en chauffant et en hydratant des particules de ladite fraction avec ajout d'enzymes jusqu'à une teneur en humidité de 20 % à 25 % pendant 0,2 à 1 seconde.

9. Procédé selon la revendication 1, dans lequel ladite fraction de maïs complet broyée par voie humide est obtenue en fournissant un grain nettoyé, en pré-conditionnant ledit grain nettoyé avec de l'eau de pulvérisation pour produire un grain complet mouillé, en broyant ledit grain complet mouillé en abrasant des parties de son en vrac de celui-ci, et en broyant par voie humide ledit grain complet mouillé en deux fractions, une première fraction étant la fraction de maïs complet broyée par voie humide composée d'endosperme, de germe et d'aleurone-son, et une seconde fraction étant composée d'endosperme, de germe et de péricarpe-son.

10. Procédé selon la revendication 9, comprenant en outre le tamisage et l'aspiration desdites première et seconde fractions avant ladite étape de combinaison (i).

11. Procédé selon la revendication 1, comprenant en outre une étape d'évacuation de ladite fraction avec ajout d'enzymes précuite avant ladite étape de conditionnement à haute teneur en solides (iii).

12. Procédé selon la revendication 1, comprenant en outre le séchage à l'air chaud desdites particules de grain de maïs conditionnées de manière enzymatique afin de produire une autre activité de gélatinisation et d'endoenzyme avant d'inactiver ledit endoenzyme et de broyer lesdites particules de grain de maïs conditionnées.

13. Procédé selon la revendication 9, comprenant en outre une étape de nouveau broyage de la seconde fraction.

14. Procédé selon la revendication 5, comprenant en outre :
la réhydratation de ladite farine de maïs prégélatinisée avec de l'eau tiède jusqu'à obtenir un rapport pondéral compris entre 1:0,9 et 1:1,4 pour former une pâte masa ; et
la préparation d'au moins un aliment à base de maïs avec ladite pâte.

15. Procédé selon la revendication 6, comprenant en outre :
le mélange de ladite farine de maïs complet instantanée avec 29 % à 49 % en poids de farine de grains, pour produire une farine de grain complet ;
la fabrication d'au moins un aliment à base de grains en utilisant la farine de grain complet comme ingrédient à base de céréales et ingrédient d'aliment fonctionnel.

16. Procédé selon la revendication 15, dans lequel la farine de grain complet est choisie dans le groupe constitué du blé dur, du blé vitreux, du blé tendre, du blé rouge, du riz, du riz brun, du maïs blanc, du maïs jaune, du maïs bleu, du maïs à forte teneur en protéines, de l'orge, du seigle, de l'avoine, du millet, du sorgho, du sorgho rouge, du sorgho pourpre, du tef, du triticale, sarrasin, de l'amarante et du quinoa.

17. Procédé selon la revendication 1, dans lequel ladite au moins une enzyme se présente sous la forme de poudre.

18. Procédé de fabrication de farine, comprenant :
(i) le préconditionnement d'un grain de maïs nettoyé avec de l'eau de pulvérisation afin de produire un grain de maïs complet mouillé ;
(ii) le broyage dudit grain de maïs complet mouillé en abrasant des parties de son en vrac de celui-ci, et le broyage par voie humide dudit grain de maïs complet mouillé en deux fractions, une première fraction étant composée d'endosperme, de germe et d'aleurone-son, et une seconde fraction étant composée d'endosperme, de germe et de péricarpe-son ;
(iii) le tamisage et l'aspiration de ladite première fraction et de ladite seconde fraction ;
(iv) le rebroyage de ladite seconde fraction ;
(v) le mélange de ladite première fraction tamisée et aspirée avec une poudre comprenant au moins une enzyme choisie dans le groupe constitué d'endoamylase et d'endoxylanase pour produire une fraction avec ajout d'enzymes ;
(vi) la précuisson à la chaleur humide de ladite fraction avec ajout d'enzymes en injectant un flux de vapeur saturée pour produire une fraction avec ajout d'enzymes précuite à la vapeur ;
(vii) l'évacuation de ladite fraction avec ajout d'enzymes précuite à la vapeur ;
(viii) le conditionnement à haute teneur en solides de ladite fraction avec ajout d'enzymes précuite à la vapeur pour hydrolyser partiellement l'endosperme amylacé et des granules d'aleurone-son de celle-ci, en produisant des xylooligosaccharides acides dans des particules de grain de maïs conditionnées de manière enzymatique ;
(ix) le séchage à l'air chaud desdites particules de grain de maïs conditionnées de manière enzymatique, en produisant des particules de grain de maïs séchées ;
(x) le refroidissement et le nouveau séchage desdites particules de grain de maïs avec de l'air pur tout en évacuant l'air humide ; et
(xi) le broyage desdites particules de grain de maïs refroidies et séchées pour obtenir une farine.
